# EUROPEAN PATENT SPECIFICATION

(11) **EP 1 342 778 B1**
(45) Date of publication and mention of the grant of the patent: **22.11.2006**
(21) Application number: 02075898.3
(22) Date of filing: 07.03.2002
(51) Int. Cl.: C12G 3/06, A23L 1/212, C11B 9/02

(54) **Method for the treatment of citrus fruit for the preparation of low limonine content alcoholic infusions**
Verfahren zur Behandlung von Zitrusfrüchten zur Gewinnung alkoholischer Infusionen mit geringem Limonengehalt
Procédé de traitement de fruits agrumes pour la préparation d'infusions alcoholisées à contenu de limonine bas

(43) Date of publication of application: 10.09.2003
(73) Proprietor: Verlight Italia S.r.l., 83030 Torre le Nocelle (AV) (IT)
(72) Inventor: De Freitas Aragao, Alexandre Jorge, 00243 Varze-Recife (BR)
(74) Representative: Crippa, Paolo Ernesto

(56) References cited:
- DE-A- 1 467 510
- GB-A- 2 027 447
- US-A- 3 347 678
- US-A- 4 299 849
- DATABASE WPI Section Ch, Week 199217 Derwent Publications Ltd., London, GB; Class D13, AN 1992-139247 XP002205546 & SU 1 650 068 A (GEOR FOOD IND RES), 23 May 1991 (1991-05-23)
- DATABASE WPI Section Ch, Week 199324 Derwent Publications Ltd., London, GB; Class D13, AN 1993-194897 XP002205547 & SU 1 741 750 A (RUDOLF V V), 23 June 1992 (1992-06-23)
- DATABASE WPI Section Ch, Week 200051 Derwent Publications Ltd., London, GB; Class B04, AN 2000-550059 XP002205548 & CN 1 257 721 A (LU F), 28 June 2000 (2000-06-28)

## Description

The present invention concerns a method for the treatment of citrus fruit for the preparation of low limonine content alcoholic infusions.

The alcoholic infusions obtained from the treatment of the citrus fruit are used in the production of different foodstuffs, such as for instance spirits, alcoholic **liqueurs**, ice creams and patisserie products. It is clear how important it is to control the organoleptic characteristics of the same infusions in order to obtain a food product which is enjoyed by consumers.

The preparation of the aforesaid alcoholic infusions provides an initial removal stage of an external portion of peel from the remaining part of the fruit and, afterwards, an alcoholic infusion stage of the same removed portion.

The external peel portion useable for the preparation of infusions is known as flavedo, which differs from the internal peel portion, known as albedo, both in its colour as well as its texture. In fact, whereas the flavedo has a colour and texture which are typical of the external appearance of the specific citrus fruit, the albedo is white in colour with a spongy texture.

Flavedo is the part which is used for the preparation of alcoholic infusions, since it includes high concentrations of both essential oils, as well as natural pigments which are characteristic of the citrus fruit. However, the albedo is not usable for the preparation of the relative alcoholic infusion since it contains lemonoids in high concentrations, among which is a substance known as limonine, which gives the same infusion an extremely bitter taste. If an unpleasantly bitter alcoholic infusion is obtained, food sweeteners would need to be added to the foodstuff, containing the aforesaid infusion, so as to make the same foodstuff more agreeable to consumers. Adding sweeteners involves an increase in costs, the significance of which is weighed up by considering the production, on an industrial scale, of foodstuffs containing the alcoholic infusion.

In general, the removal stage of the flavedo is carried out manually by using knives. Such technique, despite being able to ensure the removal of just the flavedo from the fruit, requires particularly long time periods and high labour costs. However, peeling machines exist essentially consisting of a blade and a clamping device which, with the citrus fruit jammed at its two diametrically opposite ends, sets the same citrus fruit rotating, so that the expressly adjusted blade can make a cut along the entire body of the citrus fruit. Such solutions suffer from the serious drawback of not being able to guarantee the selective removal of the flavedo. In fact, the asymmetry of the citrus fruit used makes effective blade adjustment impossible and, therefore, it occurs that part of the albedo will also be removed, together with the flavedo, with the consequences described above as regards the corresponding alcoholic infusion and, therefore, the relative foodstuff.

The citrus fruit processing machines aimed at obtaining the juice perform a squeezing operation, following which the citrus fruit will be broken down into a dense liquid part in the squeezed juice, and a solid part consisting of the peels of the squeezed citrus fruit and representing a waste product. The elimination of such a waste product represents a particularly serious problem, since such product is made up of biological material that as such is subject to phenomena of oxidation and aerobic fermentation with the obvious connected drawbacks. It is important to note that the peels, which make up the waste product of squeezing, cannot be used for the attainment of alcoholic infusions in light of the known techniques. In fact, the peels coming from the squeezing operation both have their flavedo and albedo still joined together, as well as being in a condition that is not really fit to undergo a cutting operation according to the known techniques.

The object of the present invention is to realize a method for the treatment of citrus fruit for the preparation of low limonine content alcoholic infusions, which is able to guarantee an efficient separation between the albedo portion and the flavedo portion of the peel of the same citrus fruit and that, at the same time, is able to solve the problem arising from the elimination of the peels as a waste product of the squeezing operation.

Object of the present invention is a method for the treatment of cítrus fruit for the preparation of low limonine content alcoholic infusions; said method is disclosed in claim 1 which follows.

Preferably, the enzymatic solution includes at least some pectolytic enzymes and, even more preferably, some polygalacturonase enzymes. Preferably, the enzymatic solution also includes some enzymes chosen in the group consisting of arabinases, hemicellulases and cellulases. The use of these enzymes offers the advantage of speeding up the decomposition process of the albedo.

The separation stage, according to a preferred embodiment, takes place in an aqueous stage such that the water:peel weight ratio is equal to or greater than 2, and that the enzymes are present in the aqueous stage in an amount of at least 0.05% in weight of the amount of the water itself, preferably in an amount of between 0.5 and 1.5% in weight of the amount of water.

Preferably, the aqueous stage has a pH value equal to or less than 4.5, and more preferably a pH value of between 3.0 and 4.0.

Preferably, the aqueous stage has a temperature of between 15 and 60°C, and more preferably between 35 and 50°C.

Preferably, the method includes a neutralization stage subsequent to the separation stage, so as to bring the peels obtained from the separation stage to a pH value of approx. 7 by the addition of sodium or potassium hydroxide. This neutralization stage is needed in order to use, in the infusion stage, some peels whose acidity value is neutral.

Preferably, the method object of the present invention includes a squeezing stage preceding the separation stage, and from which both the juice is obtained as a product of the same squeezing, as well as the peels on which the separation stage as defined above will be carried out.

In this manner, the elimination problem of the peels as a waste product of citrus fruit squeezing is solved.

According to an additional preferred embodiment of the present invention, the separation stage takes place at reduced pressure. In fact, the reduced pressure can help the entry of the aqueous stage and, therefore, of the enzymes inside the structure of the albedo so as to help the degradation action of the same enzymes.

The method of the present invention includes an additional processing stage, in which the enzymes also break down part of the flavedo portion. This additíonal processing stage provides the breaking down of part of the flavedo structure in such a way as to free the pigments, which, upon neutralization, will be solubilized in the alcoholic infusion stage, giving the typical colour of the processed citrus fruit to the same infusion.

Finally, it is possible to collect the albedo portion broken down by the enzymes in an aqueous solution by means of the washing water and, afterwards, upon neutralization, treat the same solution so as to obtain pectin as a product able to be used for its known uses.

In this manner, the method object of the present invention proves to be even more advantageous from the economic viewpoint.

The following examples are for illustrative, non-limiting purposes for a better understanding of the invention.

### EXAMPLE 1

### Separation stage

The orange peels obtained from an industrial squeezing operation, were cut into 10 cm squares and kept immersed in an aqueous stage made up of:
- sweetened water (free from calcium and magnesium); and
- 1% in weight as regards the amount of water of an enzymatic solution containing 10% of polygalacturonases and the commercial name of which is PEELZYME (NOVO NORDISK Bio industriale srl).

The peel/aqueous stage weight ratio is 1:3, and the temperature of the aqueous stage was kept at approx. 50°C.

As a result of the immersion of the peels, the aqueous stage had an acidic pH value of 3.5 +/- 0.1 because of the citric acid contained in the pulp residues of the same peels.

After 2 hours, sufficient time so that the albedo portion was almost totally impregnated, the aqueous stage was left to drain and likewise a wait of 2 hours was necessary so that the albedo portion was exfoliated, so as to be able to be easily removed by washing water at a temperature of 50°C.

The aqueous stage used previously was recovered and used for another cycle.

At this stage, the peels treated as above were subjected to a washing stage by means of an amount of water so as to regain the peel/aqueous solution ratio of 1:3. Some potassium hydroxide was added in this washing stage so as to bring the pH value to neutrality.

The residues of the albedo portion were removed from the washing water kept under mechanical agitation. Afterwards the washing water used was recovered, filtered and reused for another washing of the peels subjected to the enzymatic reaction.

Peels without the albedo portion were obtained at the end of this stage and with a neutral pH.

### INFUSION STAGE

The peels thus obtained were kept immersed in pure ethyl alcohol (96°) for 72 hours. The amounts of ethyl alcohol used were such as to obtain a weight ratio between peels including only the flavedo portion and the ethyl alcohol of 1: 2.

### EXAMPLE 2

The separation stage and the infusion stage were carried out exactly as described in example 1, the only difference being that, to reduce the times necessary at the separation stage, during the same separation stage a vacuum of 0.5 bar was created every 30 seconds for a period of 30 minutes. In fact, the reduced pressure favoured the quicker impregnation of the albedo portion by the aqueous stage.

### EXAMPLE 3

Following the separation stage, which was carried out exactly as described in example 1, the remaining flavedo portion was immersed in the aqueous stage containing an enzymatic solution as defined in example 1, obtaining a relative suspension. The weight ratio between the peels including only the flavedo portion and the enzymatic solution was 1:1. After 1 hour the suspension, kept at a temperature of 50°C, was directly added to the pure ethyl alcohol in a weight ratio of 1:1, and the infusion stage was carried out as described in example 1.

In this manner an intensely coloured infusion was obtained thanks to the degradation action of the enzymes on a part of the flavedo portion.

As it is possible to note from the above description, the method object of the present invention is able to, at the same time, ensure both the complete separation of the albedo portion from the flavedo portion within reasonable times and without being labour intensive, as well as solving the serious problem concerning the recycling of organic material namely the peels as a result of the industrial squeezing operation.

## Claims

1. Method for the treatment of citrus fruit for the preparation of low limonine content alcoholic infusions; said method including at least one separation stage of a flavedo portion from an albedo portion of peels of said citrus fruit, and an infusion stage in which said flavedo portion is immersed in alcohol; said method being **characterized in that** said separation stage includes the use of an enzymatic solution able to break down said albedo portion of said peels and **in that** said method includes an additional stage in which said enzymes break down part of said flavedo portion..

2. Method as in claim 1, **characterized in that** said enzymatic solution includes pectolytic enzymes.

3. Method as in claim 2, **characterized in that** said pectolytic enzymes are polygalacturonases.

4. Method as in claim 3, **characterized in that** said enzymatic solution includes additional enzymes chosen in the group consisting of arabinases, hemicellulases and cellulases.

5. Method as in any one of the previous claims, **characterized in that** said separation stage occurs in an aqueous stage whose amount of water is such that the water:peel weight ratio is equal to or greater than 2, and that said enzymes are present in said aqueous stage in an amount of at least 0.01% in weight of the amount of water.

6. Method as in claim 5, **characterized in that** said enzymes are present in an amount of between 0.5 and 1.5% in weight of the amount of water.

7. Method as in claim 5 or 6, **characterized in that** said aqueous stage has a pH value equal to or less than 4.5.

8. Method as in claim 7, **characterized in that** said pH value is between 3.0 and 4.0.

9. Method as in any one of the claims from 4 to 8, **characterized in that** said aqueous stage has a temperature of between 15 and 60°C.

10. Method as in claim 9, **characterized in that** said temperature is between 35 and 50°C.

11. Method as in any one of the previous claims, **characterized in that** it includes a neutralization stage subsequent to said separation stage and aimed at the attainment of peels having a pH value of approx. 7.

12. Method as in any one of the previous claims, **characterized in that** it includes a squeezing stage preceding said separation stage.

13. Method as in any one of the previous claims, **characterized in that** said separation stage takes place at reduced pressure

14. Method as in any one of the previous claims, **characterized in that** it includes a washing stage subsequent to said separation stage and aimed at the concentration in an aqueous solution of said broken down albedo portion; said aqueous solution being processed for the attainment of pectin.

15. Alcoholic infusion of citrus fruit **characterized in that** it is obtained from any one of the previous claims.

16. Edible product **characterized in that** it includes an alcoholic infusion as in claim 15.

## Patentansprüche

1. Verfahren zur Behandlung von Zitrusfrucht zur Herstellung von alkoholischen Infusionen mit niedrigem Limoningehalt, wobei das Verfahren mindestens eine Trennungsstufe eines Flavedo-Anteils von einem Albedo-Anteil von Schalen der Zitrusfrucht und eine Infusionsstufe, worin der Flavedo-Anteil in Alkohol eingetaucht wird, einschließt, wobei das Verfahren **dadurch gekennzeichnet ist, daß** die Trennungsstufe die Verwendung einer enzymatischen Lösung einschließt, die befähigt ist, den Albedo-Anteil der Schalen aufzuspalten und daß das Verfahren eine zusätzliche Stufe einschließt, worin die Enzyme einen Teil des Flavedo-Anteils aufspalten.

2. Verfahren gemäß Anspruch 1, **dadurch gekennzeichnet, daß** die enzymatische Lösung pektolytische Enzyme einschließt.

3. Verfahren gemäß Anspruch 2, **dadurch gekennzeichnet, daß** die pektolytischen Enzyme Polygalacturonasen sind.

4. Verfahren gemäß Anspruch 3, **dadurch gekennzeichnet, daß** die enzymatische Lösung zusätzliche Enzyme, ausgewählt aus der Gruppe, bestehend aus Arabinasen, Hemicellulasen und Cellulasen, einschließt.

5. Verfahren gemäß einem der vorhergehenden Ansprüche, **dadurch gekennzeichnet, daß** die Trennungsstufe in einer wässerigen Stufe stattfindet, dessen Wassermenge derart ist, daß das Gewichtsverhältnis von Wasser:Schale gleich oder größer als 2 ist und daß die Enzyme in der wässerigen Stufe in einer Menge von mindestens 0,01 % bezogen auf das Gewicht der Menge an Wasser vorliegen.

6. Verfahren gemäß Anspruch 5, **dadurch gekennzeichnet, daß** die Enzyme in einer Menge von zwischen 0,5 und 1,5 % bezogen auf das Gewicht der Menge an Wasser vorliegen.

7. Verfahren gemäß Anspruch 5 oder 6, **dadurch gekennzeichnet, daß** die wässerige Stufe einen pH-Wert von gleich oder weniger als 4,5 aufweist.

8. Verfahren gemäß Anspruch 7, **dadurch gekennzeichnet, daß** der pH-Wert zwischen 3,0 und 4,0 liegt.

9. Verfahren gemäß einem der Ansprüche 4 bis 8, **dadurch gekennzeichnet, daß** die wässerige Stufe eine Temperatur von zwischen 15 und 60°C aufweist.

10. Verfahren gemäß Anspruch 9, **dadurch gekennzeichnet, daß** die Temperatur zwischen 35 und 50°C liegt.

11. Verfahren gemäß einem der vorhergehenden Ansprüche, **dadurch gekennzeichnet, daß** es eine Neutralisationsstufe nachfolgend der Trennungsstufe und ausgerichtet auf die Erlangung von Schalen mit einem pH-Wert von annähernd 7 einschließt.

12. Verfahren gemäß einem der vorhergehenden Ansprüche, **dadurch gekennzeichnet, daß** es eine Zusammenpreßstufe vor der Trennungsstufe einschließt.

13. Verfahren gemäß einem der vorhergehenden Ansprüche, **dadurch gekennzeichnet, daß** die Trennungsstufe bei reduziertem Druck stattfindet.

14. Verfahren gemäß einem der vorhergehenden Ansprüche, **dadurch gekennzeichnet, daß** es eine Waschstufe nachfolgend der Trennungsstufe und ausgerichtet auf die Konzentration in einer wässerigen Lösung des aufgespaltenen Albedo-Anteils einschließt, wobei die wässerige Lösung zur Erlangung von Pektin verarbeitet wird.

15. Alkoholische Zitrusfrucht-Infusion, **dadurch gekennzeichnet, daß** sie aus einem der vorhergehenden Ansprüche erhalten wird.

16. Eßbares Produkt, **dadurch gekennzeichnet, daß** es eine alkoholische Infusion gemäß Anspruch 15 einschließt.

## Revendications

1. Procédé pour le traitement d'agrume pour la préparation d'infusions alcoolisées à faible teneur en limonine, ledit procédé incluant au moins une étape de séparation d'une portion de flavedo depuis une portion d'albédo d'écorces desdites agrumes, et une étape d'infusion dans laquelle ladite portion de flavedo est immergée dans de l'alcool, ledit procédé étant **caractérisé en ce que** ladite étape de séparation inclut l'utilisation d'une solution enzymatique capable de dégrader ladite portion d'albédo desdites écorces et **en ce que** ledit procédé inclut une étape additionnelle dans laquelle lesdites enzymes dégradent une partie de ladite portion de flavedo.

2. Procédé selon la revendication 1, **caractérisé en ce que** ladite solution enzymatique inclut des enzymes pectolytiques.

3. Procédé selon la revendication 2, **caractérisé en ce que** lesdites enzymes pectolytiques sont des polygalacturonases.

4. Procédé selon la revendication 3, **caractérisé en ce que** ladite solution enzymatique inclut des enzymes additionnelles sélectionnées dans le groupe constitué d'arabinases, d'hémicellulases et de cellulases.

5. Procédé selon l'une quelconque des revendications précédentes, **caractérisé en ce que** ladite étape de séparation intervient dans une étape aqueuse dont la quantité d'eau est telle que le rapport pondéral eau : écorce est égal ou supérieur à 2, et **en ce que** lesdites enzymes sont présentes dans ladite étape aqueuse en une quantité d'au moins 0,01 % en poids de la quantité d'eau.

6. Procédé selon la revendication 5, **caractérisé en ce que** lesdites enzymes sont présentes en une quantité d'entre 0,5 et 1,5 % en poids de la quantité d'eau.

7. Procédé selon la revendication 5 ou 6, **caractérisé en ce que** ladite étape aqueuse a une valeur de pH égale ou inférieure à 4,5.

8. Procédé selon la revendication 7, **caractérisé en ce que** ladite valeur de pH est entre 3,0 et 4,0.

9. Procédé selon l'une quelconque des revendications 4 à 8, **caractérisé en ce que** ladite étape aqueuse a une température entre 15 et 60°C.

10. Procédé selon la revendication 9, **caractérisé en ce que** ladite température est entre 35 et 50 °C.

11. Procédé selon l'une quelconque des revendications précédentes, **caractérisé en ce qu'**il inclut une étape de neutralisation ultérieure à ladite étape de séparation et visant l'obtention d'écorces ayant une valeur de pH d'environ 7.

12. Procédé selon l'une quelconque des revendications précédentes, **caractérisé en ce qu'**il inclut une étape de compression précédant ladite étape de séparation.

13. Procédé selon l'une quelconque des revendications précédentes, **caractérisé en ce que** ladite étape de séparation a lieu à pression réduite.

14. Procédé selon l'une quelconque des revendications précédentes, **caractérisé en ce qu'**il inclut une étape de lavage ultérieure à ladite étape de séparation et visant la concentration dans une solution aqueuse de ladite portion d'albédo dégradée, ladite solution aqueuse étant traitée pour l'obtention de pectine.

15. Infusion alcoolisée d'agrume **caractérisée en ce qu'**elle soit obtenue à partir de l'une quelconque des revendications précédentes.

16. Produit comestible **caractérisé en ce qu'**il inclut une infusion alcoolisée selon la revendication 15.
